# DEMANDE DE BREVET EUROPEEN

(11) **EP 2 565 413 A1**
(43) Date de publication de la demande: **06.03.2013**
(21) Numéro de dépôt: 12177994.6
(22) Date de dépôt: 26.07.2012
(51) Int. Cl.: F01N 11/00, F01N 3/20

(54) **Procede de protection thermique d'un organe de depollution d'une ligne d'echappement et vehicule correspondant**

(30) Priorité: 01.09.2011 FR 1157716
(71) Demandeur: PEUGEOT CITROËN AUTOMOBILES SA, 78140 Velizy-Villacoublay (FR)
(72) Inventeur: Gaillard, Patrick, 92000 NANTERRE (FR); Souchon, Vincent, 92600 ASNIERES SUR SEINE (FR)

(57) **Abrégé**

Un procédé de protection thermique d'un organe de dépollution d'une ligne d'échappement pour un véhicule automobile hybride comprenant un moteur à combustion interne et un moteur électrique, le procédé étant dans lequel l'organe de dépollution à protéger thermiquement est un injecteur de réducteur pour réduction catalytique sélective et en ce qu'il comprend : la détermination (S10) d'une température de l'injecteur de réducteur ; la comparaison (S20) entre la température déterminée et une température limite prédéterminée (T_{L}) ; l'entraînement (S30) du moteur à combustion interne éteint par le moteur électrique en fonction de la comparaison précédente des températures.

L'invention permet d'obtenir une protection thermique de l'injecteur de réducteur pour une réduction catalytique sélective présent dans un véhicule automobile hybride.

## Description

La présente invention concerne un procédé de protection thermique d'un organe de dépollution d'une ligne d'échappement pour un véhicule automobile hybride.

Dans le domaine de l'industrie automobile, la réduction de la consommation de carburant et la diminution de l'émission de polluants sont des problèmes majeurs.

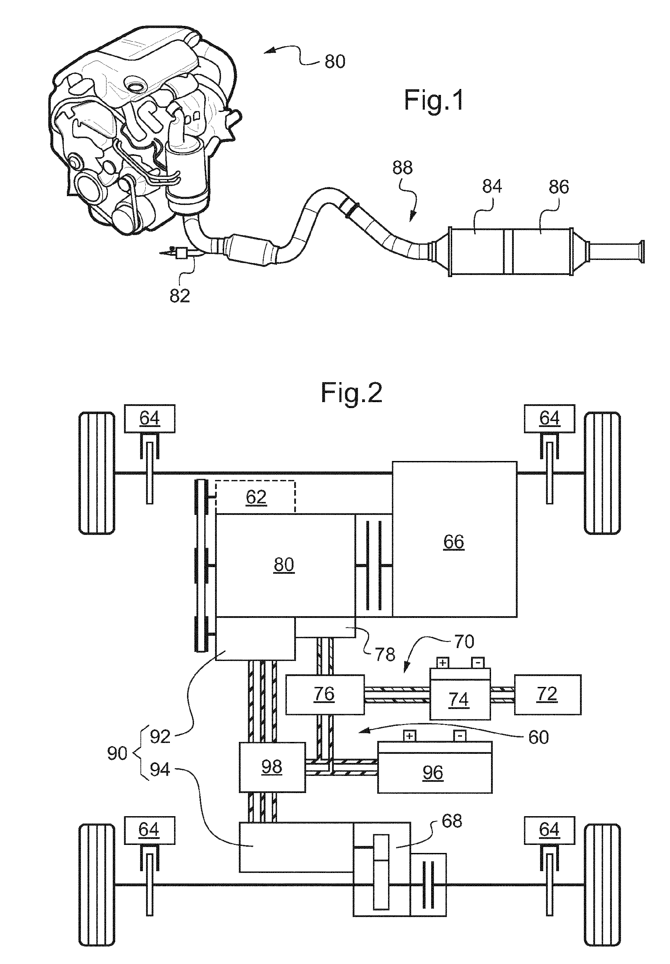

Le monoxyde d'azote (NO), le dioxyde d'azote (NO2) et le protoxyde d'azote (N2O) sont des gaz polluants, généralement connus sous le nom de NOx, et dont on cherche à diminuer les émissions dans l'atmosphère. Dans un but de diminution de l'émission de polluant, il est utile de prévoir un organe spécifique de dépollution du dioxyde d'azote et de tous les oxydes d'azote en particulier. Les moyens typiquement utilisés pour l'élimination de ces gaz sont des organes de réduction catalytique sélective (de l'anglais Selective Catalytic Reduction abrégé en SCR) associés à une injection de réducteur par exemple de l'urée ou du NH3. Dans la suite de ce document, l'abréviation "SCR" et le terme "réduction catalytique sélective" sont indifféremment utilisés. L'injection de réducteur dans la ligne d'échappement peut être mise en oeuvre à l'aide d'un injecteur spécifique. La figure 1 montre une vue en perspective d'un moteur à combustion interne 80 associé à une ligne d'échappement 88 des gaz de combustion du moteur 80. Cette ligne d'échappement 88 comprend un injecteur de réducteur 82 disposé en amont d'un organe SCR 84. La ligne d'échappement 88 peut aussi comprendre un filtre à particules 86 associé avec l'organe SCR 84.

La tenue de l'injecteur de réducteur 82 peut être particulièrement altérée du fait des coups de chaud survenant en phase d'arrêt du moteur thermique (appelé moteur à combustion interne dans la suite du document). Ces coups de chaud sont susceptibles d'intervenir après une forte charge moteur ou une régénération du filtre à particules 86 générant des températures à l'échappement élevées et un risque d'ébullition du réducteur contenue dans l'injecteur. L'ébullition du réducteur peut entraîner la corrosion de l'injecteur 82 et favoriser un dépôt dur de réducteur par cristallisation aboutissant à un blocage ouverture/fermeture de l'injecteur 82 et à une perte d'étanchéité.

Dans un but de réduction de la consommation de carburant, des véhicules automobiles comprenant un moteur électrique en plus d'un moteur à combustion interne sont apparus. Ces véhicules sont qualifiés de véhicules hybrides du fait qu'ils peuvent être mus selon deux modes de fonctionnement différents : un mode de fonctionnement thermique et un mode de fonctionnement électrique. Ces deux modes de fonctionnement peuvent être successifs l'un à l'autre, ainsi lorsque le moteur à combustion interne est éteint, le véhicule peut basculer en mode de fonctionnement électrique et se déplacer à l'aide du moteur électrique. La figure 2 montre une vue schématique d'une architecture d'un véhicule hybride.

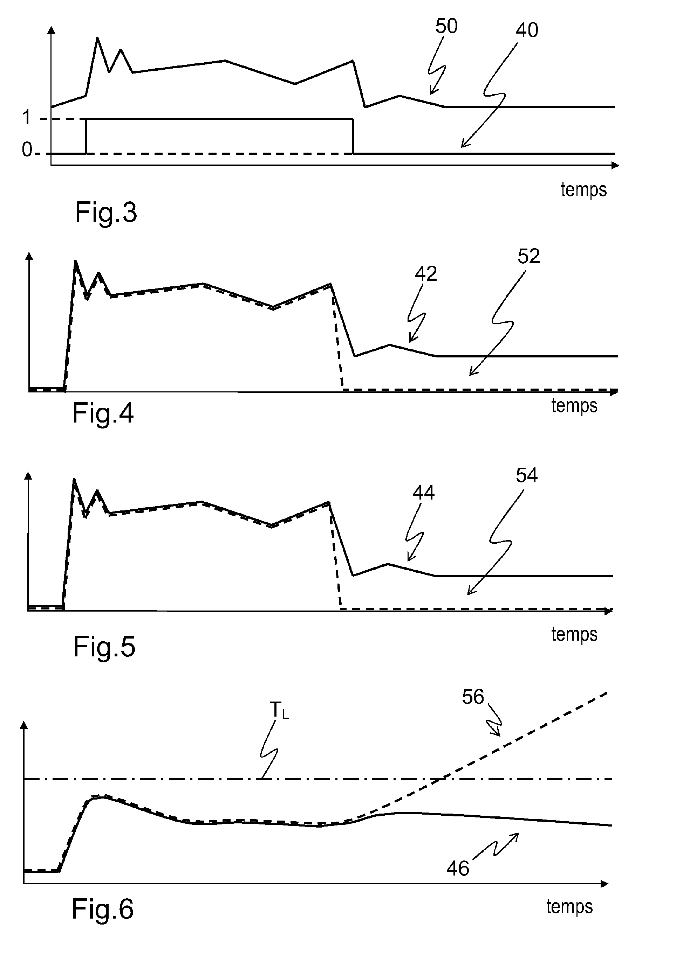

Lors d'un roulage du véhicule automobile, un superviseur hybride, hébergé dans un calculateur (non représenté) du véhicule, décide si la traction doit être effectuée par le moteur à combustion interne 80 ou par le moteur électrique 90 (représenté par la machine électrique haute tension avant 92 et la machine électrique haute tension arrière 94. Cette décision est prise en fonction de conditions multiples : charge d'une batterie haute tension 96 (alimentant le réseau haute tension au travers d'un onduleur 98), position d'une pédale d'accélérateur (non représentée) du régime du véhicule, température extérieure, ... A titre d'illustration de la décision du mode de fonctionnement du véhicule en fonction de la vitesse du véhicule, la figure 3 montre un graphique temporel d'une séquence du fonctionnement du véhicule automobile hybride de la figure 2. Ainsi selon la vitesse du véhicule 50, le moteur à combustion interne peut être allumé (courbe 40 au niveau 1) ou éteint (courbe 40 au niveau 0).

L'architecture hybride illustré en figure 2 montre un flux électrique basse tension 70 circulant entre un réseau de bord basse tension 72, une batterie basse tension 74, un démarreur 78 du moteur à combustion interne 80 et un convertisseur DC/DC 76. Le convertisseur DC/DC (abréviation de *direct current*/*direct current,* expression anglaise correspondant à un convertisseur courant continu/courant continu) assure la conversion entre le réseau basse tension et un réseau haute tension 60. L'architecture hybride illustrée comprend de plus des organes que l'on retrouve sur les véhicules avec moteur à combustion interne uniquement : un compresseur de climatiseur 62, des freins 64 à chaque roue, une boîte de vitesse pilotée 66. Les freins 64 peuvent correspondre à des freins dotés d'équipement de sécurité active (plus connu sous l'abréviation ESP, de l'expression anglaise *Electronic Stability Program).* La boîte de vitesse peut être du type mécanique compacte pilotée (en abrégé : MCP).

Dans un but de réduction des émissions de polluants, les véhicules hybrides peuvent avantageusement être dotés d'organes de dépollution des gaz d'échappement du moteur à combustion interne, tel qu'un organe SCR avec un injecteur de réducteur tel que précédemment décrit.

Cependant, contrairement au véhicule comprenant uniquement un moteur à combustion interne, pour les véhicules hybrides, les arrêts du moteur à combustion interne sont très fréquents puisqu'ils sont suivis d'un roulage électrique. La plus grande fréquence des arrêts de moteur à combustion interne dans un véhicule automobile hybride entraîne une augmentation de la criticité du risque sur la tenue thermique de l'injecteur de réducteur décrit précédemment.

Il existe donc un besoin pour une protection thermique de l'injecteur de réducteur SCR présent dans un véhicule automobile hybride.

Pour cela l'invention propose un procédé de protection thermique d'un organe de dépollution d'une ligne d'échappement pour un véhicule automobile hybride comprenant un moteur à combustion interne et un moteur électrique, dans lequel l'organe de dépollution à protéger thermiquement est un injecteur de réducteur pour réduction catalytique sélective et en ce qu'il comprend :
- la détermination d'une température de l'injecteur de réducteur ;
- la comparaison entre la température déterminée et une température limite prédéterminée ;
- l'entraînement du moteur à combustion interne éteint par le moteur électrique en fonction de la comparaison précédente des températures.

Selon une variante, la détermination de la température de l'injecteur est mise en oeuvre lors de l'extinction du moteur à combustion interne, l'entraînement du moteur à combustion interne par le moteur électrique étant réalisé par le maintien de la fermeture d'un embrayage entre le moteur à combustion interne éteint et une chaîne de traction mue par le moteur électrique.

Selon une variante, après une itération des étapes de détermination d'une température de l'injecteur de réducteur et de comparaison entre la température déterminée et la température limite prédéterminée, le procédé comprend l'ouverture de l'embrayage entre le moteur à combustion interne éteint et la chaîne de traction mue par le moteur électrique en fonction de la nouvelle comparaison des températures.

Selon une variante, par défaut, à l'extinction du moteur à combustion interne, le moteur à combustion interne est débrayé du moteur électrique.

Selon une variante, la détermination de la température de l'injecteur est réalisée par une estimation à partir de l'un au moins des moyens suivants :
- une modélisation de la température de l'injecteur ;
- une modélisation de la température des gaz dans la ligne d'échappement ;
- une mesure de la température des gaz dans la ligne d'échappement ;
- une modélisation du débit des gaz dans la ligne d'échappement ; et
- une mesure du débit des gaz dans la ligne d'échappement.

Selon une variante, le procédé comprend une injection de réducteur dans la ligne d'échappement, en cas d'entraînement du moteur à combustion interne éteint par le moteur électrique.

Selon une variante, l'injection de réducteur dans la ligne d'échappement est réalisée en cas d'entraînement du moteur à combustion interne éteint par le moteur électrique, après une itération des étapes de détermination d'une température de l'injecteur de réducteur et de comparaison entre la température déterminée et la température limite prédéterminée, en fonction de la nouvelle comparaison des températures.

Selon une variante, les étapes de détermination de la température de l'injecteur de réducteur et de comparaison avec une température limite prédéterminée sont mises en oeuvre lorsque le moteur à combustion interne est en fonctionnement, le procédé comprenant l'extinction du moteur à combustion interne en fonction de la comparaison des températures.

Selon une variante, le réducteur de réduction catalytique sélective est de l'urée ou une solution comprenant de l'urée.

L'invention propose aussi un véhicule automobile hybride comprenant un calculateur, un moteur à combustion interne et un moteur électrique ainsi qu'une ligne d'échappement des gaz issus du moteur à combustion interne comprenant un injecteur de réducteur pour la réduction catalytique sélective, dans lequel le calculateur est spécialement conçu pour la mise en ouvre du procédé précédent.

D'autres caractéristiques et avantages de l'invention apparaîtront à la lecture de la description détaillée qui suit de modes de réalisation de l'invention, donnés à titre d'exemple uniquement et en référence aux dessins qui montrent :
- figure 1, une vue en perspective d'un moteur à combustion interne associé à une ligne d'échappement des gaz de combustion du moteur ;
- figure 2, une vue schématique d'une architecture d'un véhicule automobile hybride ;
- figure 3, un graphique temporel d'une séquence de fonctionnement du véhicule automobile hybride de la figure 2 ;
- figure 4, un graphique temporel du débit d'air dans le moteur à combustion interne avant et après l'extinction du moteur à combustion interne dans un véhicule hybride selon la séquence de fonctionnement de la figure 3 ;
- figure 5, un graphique temporel du régime moteur du moteur à combustion interne avant et après l'extinction d'un moteur à combustion interne dans un véhicule hybride selon la séquence de fonctionnement de la figure 3 ;
- figure 6, un graphique temporel de la température de l'injecteur de réducteur avant et après l'extinction du moteur à combustion interne dans un véhicule hybride selon la séquence de fonctionnement de la figure 3 ;
- figure 7, un graphique temporel du débit d'injection de réducteur dans la ligne d'échappement avant et après l'extinction du moteur à combustion interne dans un véhicule hybride selon la séquence de fonctionnement de la figure 3 ;
- figure 8, un organigramme d'un mode de réalisation de l'invention.

Il est proposé un procédé de protection thermique d'un organe de dépollution d'une ligne d'échappement. Selon le procédé, l'organe de dépollution à protéger est un injecteur de réducteur pour réduction catalytique sélective. Dans la suite de ce document, il est fait référence à la figure 1 et à sa description, pour concrétiser la référence à une ligne d'échappement et à un injecteur de réducteur SCR.

Ce procédé est proposé pour un véhicule automobile hybride comprenant un moteur à combustion interne et un moteur électrique. Dans la suite de ce document, il est fait référence à la figure 2 et à sa description, pour concrétiser la référence à un véhicule automobile hybride et à ses différents éléments.

Le procédé comprend la détermination de la température de l'injecteur de réducteur 82. Selon un mode de réalisation préféré, la détermination de la température de l'injecteur 82 peut être réalisée par une estimation de la température à partir de l'un au moins des moyens suivants :
- une modélisation de la température de l'injecteur ;
- une modélisation de la température des gaz dans la ligne d'échappement ;
- une mesure de la température des gaz dans la ligne d'échappement ;
- une modélisation du débit des gaz dans la ligne d'échappement ;

Le procédé comprend ensuite la comparaison de la température déterminée et une température limite prédéterminée. La température limite prédéterminée correspond à une température critique à partir de laquelle l'injecteur de réducteur peut subit un endommagement. La température limite prédéterminée peut correspondre à une température prédéterminée qui peut être variable en fonction de différents paramètres de fonctionnement du véhicule tel que la température extérieure par exemple. La comparaison des températures permet de s'assurer de la détection d'état où la température de l'injecteur est trop proche de la température limite ce qui indique qu'il est préférable que l'injecteur de réducteur soit refroidit.

Ainsi, en fonction de la comparaison précédente des températures, le procédé comprend encore l'entraînement du moteur à combustion interne éteint par le moteur électrique 90. L'extinction du moteur à combustion interne correspond à une coupure de l'injection de carburant dans le moteur électrique. Le carburant du moteur à combustion interne peut être de l'essence ou du diesel selon que moteur est un moteur Diesel ou un moteur à allumage commandé. L'entraînement du moteur à combustion interne éteint entraîne le pompage d'air à l'intérieur du moteur et son éjection dans la ligne d'échappement. L'éjection d'air du moteur éteint assure qu'un débit d'air frais traverse la ligne d'échappement.

La figure 4 montre un graphique temporel du débit d'air dans le moteur à combustion interne avant et après l'extinction du moteur à combustion interne dans un véhicule hybride. Le graphique de la figure 4 suit la séquence de fonctionnement de la figure 3. Du fait de l'entraînement du moteur à combustion interne éteint par le moteur électrique, le débit d'air 42 (trait continu) est maintenu non nul contrairement au débit d'air 52 (trait discontinu) correspondant à une situation classique où le moteur à combustion interne éteint n'est pas entraîné par le moteur électrique.

En effet, dans une situation classique pour les véhicules hybrides en roulage électrique, c'est-à-dire lorsque le moteur à combustion interne est éteint, le moteur à combustion interne est découplé de la chaine de traction une fois éteint, pour éviter une surconsommation de l'énergie électrique. Un embrayage reliant le moteur à combustion interne à la chaîne de traction est alors ouvert pour ne pas subir de pertes énergétiques liées à l'entraînement du moteur à combustion interne éteint par le moteur électrique. La figure 5 montre un graphique temporel du régime moteur du moteur à combustion interne avant et après l'extinction d'un moteur à combustion interne dans un véhicule hybride. Le graphique de la figure 5 suit la séquence de fonctionnement de la figure 3. On voit que le régime 54 du moteur à combustion interne éteint découplé (trait discontinu) est nul alors que le régime 44 du moteur à combustion interne éteint mais qui n'aurait pas été découplé (trait continu) est non nul ce qui correspond à des pertes énergétiques. Le régime du moteur à combustion interne éteint non découplé dépend du rapport engagé de la boîte de vitesse qui assure le couplage entre le moteur électrique et moteur à combustion interne éteint. Les pertes énergétiques peuvent être des pertes par frottement (piston contre le cylindre, vilebrequin, accessoires, ...) et des pertes par pompage (effort pour comprimer l'air aspiré par le moteur). Cependant en découplant le moteur à combustion interne après son extinction, le débit d'air dans la ligne d'échappement est nul ce qui ne permet pas de refroidir l'injecteur 82 dans la ligne d'échappement 80.

Ainsi, le procédé proposé contribue à la réduction de la température de l'injecteur de réducteur lorsque le moteur à combustion interne est éteint. La figure 6 montre un graphique temporel de la température de l'injecteur avant et après l'extinction du moteur à combustion interne. Le graphique de la figure 6 suit la séquence de fonctionnement de la figure 3. Dans le cas où le moteur à combustion interne est découplé une fois éteint, la température 56 de l'injecteur (trait discontinu), l'absence de refroidissement par la circulation d'un débit d'air dans la ligne d'échappement entraîne un dépassement de la température limite T_{L}. A l'inverse selon le procédé proposé, le maintien du débit d'air dans la ligne d'échappement garantie une limitation de l'augmentation de la température 46 de l'injecteur (trait continu).

En définitive l'invention permet une protection thermique de l'injecteur de réducteur SCR présent dans un véhicule automobile hybride.

Le procédé proposé peut être mis en oeuvre pour tout mode d'introduction du carburant ou d'alimentation en air du moteur à combustion interne. Le procédé proposé peut aussi être mis en oeuvre pour tout type de réducteur SCR. Il est cependant préféré que le réducteur SCR soit de l'urée ou une solution à base d'urée.

L'invention se rapporte aussi à un véhicule automobile hybride comprenant un moteur à combustion interne et un moteur électrique ainsi qu'une ligne d'échappement des gaz issus du moteur à combustion interne. La ligne d'échappement comprend un injecteur de réducteur pour la réduction catalytique sélective des gaz issus du moteur à combustion interne. Le véhicule automobile proposé comprend en outre un calculateur. Le calculateur correspond par exemple à un superviseur hybride qui décide du passage du mode de fonctionnement du véhicule (électrique ou thermique ou les deux combinés) en fonction des paramètres du véhicules. Le superviseur hybride est de façon connue intégré dans le calculateur de contrôle moteur. Cependant le calculateur du véhicule est ici spécialement conçu pour la mise en oeuvre du procédé de protection précédemment proposé.

En plus des avantages précédemment décrits, l'invention permet de maintenir la fonctionnalité du système SCR (injecteur de réducteur et organe SCR) pour le véhicule proposé et ce même en cas d'occurrence d'un grand nombre d'arrêts du moteur à combustion interne suivi d'un mode de fonctionnement électrique du véhicule. Par ailleurs, la protection procurée par le procédé proposé évite un dimensionnement particulier des injecteurs de réducteurs pour les applications hybrides. Ceci permet avantageusement d'utiliser les mêmes injecteurs de réducteur pour des véhicules hybrides et pour des véhicules classiques avec moteur à combustion interne uniquement.

En référence à la figure 6, il est préféré que l'entraînement du moteur à combustion interne éteint par le moteur électrique soit réalisé lorsque la température déterminée de l'injecteur est suffisamment proche de la température limite T_{L}. Cette proximité des températures peut être déterminée par le calcul d'un ratio des températures et/ou par un calcul des différences des températures. Par exemple, on peut réaliser l'entraînement du moteur à combustion interne éteint dès que la température déterminée de l'injecteur dépasse la moitié de la température limite (soit 50% de la température limite), ou de préférence lorsque la température déterminée dépasse 75 % de la température limite.

Dans le mode de réalisation illustré en figures 4 à 6, le procédé de protection proposé est mis en oeuvre à l'extinction du moteur à combustion interne. Ainsi, on peut simplement réaliser l'entraînement du moteur à combustion interne par le moteur électrique par le maintien de la fermeture d'un embrayage entre le moteur à combustion interne éteint et une chaîne de traction mue par le moteur électrique. Selon ce mode de réalisation la détermination de la température de l'injecteur peut être mise en oeuvre après l'extinction du moteur à combustion interne.

Dans le cas où la comparaison des températures ne permet pas d'établir un risque pour l'injecteur de réducteur, le procédé de protection peut comprendre le débrayage entre le moteur électrique et le moteur à combustion interne lorsque le moteur à combustion interne est éteint. En d'autres termes, par défaut, il est préférable qu'à l'extinction du moteur à combustion interne, le moteur soit débrayé du moteur électrique.

En alternative ou en complément des modes de réalisation précédents, les étapes de détermination de la température de l'injecteur de réducteur et de comparaison avec une température limite prédéterminée sont mises en oeuvre lorsque le moteur à combustion interne est en fonctionnement. Selon ce mode de réalisation, le procédé peut comprendre l'extinction du moteur à combustion interne en fonction de la comparaison des températures. En d'autres termes, l'extinction du moteur à combustion interne peut être forcée lorsque la température de l'injecteur de réducteur est trop proche de la température limite T_{L}.

Selon les modes de réalisation précédents, après le maintien de la fermeture de l'embrayage, le procédé peut comprendre une itération des étapes de détermination de la température de l'injecteur et de comparaison de la nouvelle température obtenue avec la température limite T_{L}. Cette nouvelle comparaison permet de déterminer s'il est toujours judicieux de maintenir l'entraînement du moteur à combustion interne éteint alors que tout risque de dégradation thermique de l'injecteur peut être écarté. Ainsi le procédé peut comprendre l'ouverture de l'embrayage entre le moteur à combustion interne éteint et la chaîne de traction mue par le moteur électrique en fonction de la nouvelle comparaison des températures. L'itération des étapes de détermination de la température de l'injecteur et de comparaison permet alors de minimiser les pertes d'énergies liées à l'entraînement du moteur à combustion interne éteint en réévaluant l'opportunité d'un refroidissement de l'injecteur de réducteur.

Selon un mode de réalisation préféré, le procédé comprend une injection de réducteur dans la ligne d'échappement, en cas d'entraînement du moteur à combustion interne éteint par le moteur électrique. L'injection de réducteur dans la ligne d'échappement permet d'évacuer le réducteur surchauffé et de refroidir l'injecteur. Ainsi en résumé, on peut bénéficier de deux moyens pour garantir le non dépassement de la température critique T_{L} : le refroidissement par circulation d'air frais dans la ligne d'échappement et l'injection de réducteur dans l'air frais circulant dans la ligne d'échappement. Il est préférable de réaliser l'injection de réducteur que lorsque le débit d'air dans la ligne d'échappement est non nul, c'est-à-dire, dans le cas où le moteur à combustion interne est éteint, lorsque le moteur à combustion interne est entraîné par le moteur électrique. En effet, sans débit de gaz au nez de l'injecteur, un dépôt de réducteur est susceptible de se former sur le nez de l'injecteur et dans la ligne d'échappement en vis-à-vis du nez de l'injecteur, ce qui peut aboutir à un colmatage de l'injecteur et de la ligne d'échappement.

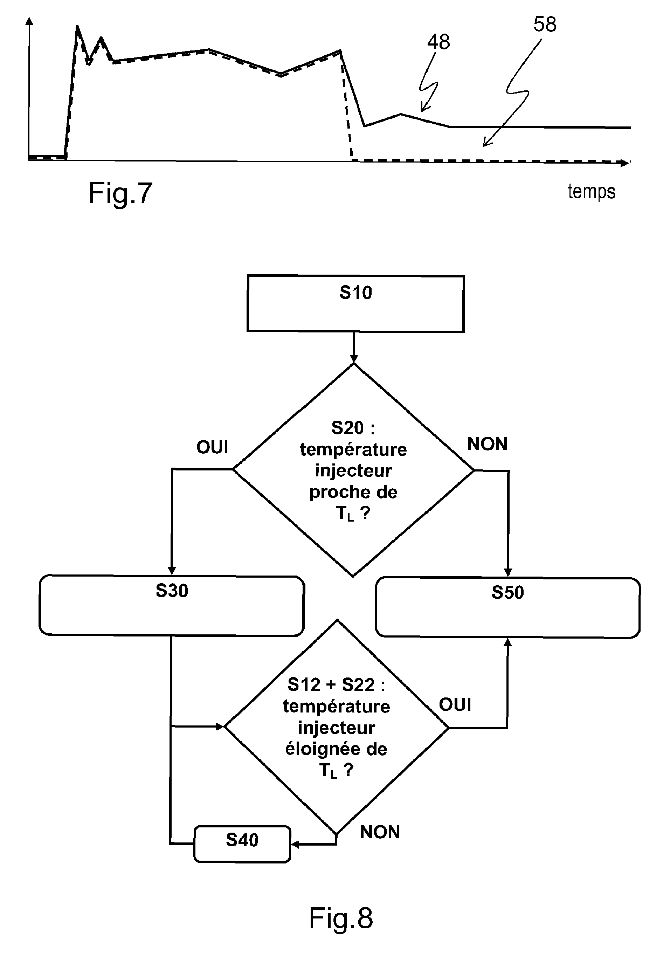

La figure 7 montre un graphique temporel du débit d'injection de réducteur dans la ligne d'échappement avant et après l'extinction du moteur à combustion interne. Le graphique de la figure 7 suit la séquence de fonctionnement de la figure 3. Selon le procédé proposé le débit 48 (trait continu) d'injection de réducteur dans la ligne d'échappement peut être maintenu après l'extinction du moteur à combustion interne alors que le débit 58 (trait discontinu) est classiquement arrêté avec l'extinction du moteur à combustion interne.

Selon un mode de réalisation préféré, en cas d'entraînement du moteur à combustion interne éteint par le moteur électrique, on itère les étapes de détermination d'une température de l'injecteur de réducteur et de comparaison entre la température déterminée et la température limite prédéterminée de manière à réaliser l'injection de réducteur dans la ligne d'échappement en fonction de la nouvelle comparaison des températures. La figure 8 montre un organigramme d'un tel mode de réalisation.

A l'étape S10, on détermine la température de l'injecteur, par exemple à l'aide d'une estimation à partir de mesures physiques (capteur de température, débitmètre) et/ou de modèle de la température des gaz d'échappement, et du débit des gaz d'échappement.

A l'étape S20, on réalise une première comparaison de la température déterminée avec la température critique (température limite T_{L}). En fonction de cette comparaison :
Si la température de l'injecteur de réducteur est proche de la température limite lorsque le contrôleur décide d'arrêter le moteur à combustion interne et d'activer le moteur électrique, alors la stratégie de protection de l'injecteur demande la fermeture de l'embrayage de sorte à ce que le moteur à combustion interne reste couplé et assure la circulation d'un débit d'air dans la ligne d'échappement (S30) ;
• Si non, l'embrayage est ouvert, le moteur à combustion interne est éteint et n'est pas entraîné par le moteur électrique, ce qui correspond au mode de fonctionnement classique (S50).

A la suite de l'étape S30, l'embrayage étant maintenu fermé, on itère les étapes de détermination de la température et de comparaison des températures (étapes S12 et S22 respectivement) :
- Si la température de l'injecteur de réducteur est toujours critique, la stratégie de protection demandera l'injection de réducteur (S40).
- Si la température de l'injecteur n'est plus critique, la stratégie de protection se désactive en demandant l'ouverture de l'embrayage de sorte à découpler le moteur à combustion interne de la chaîne de traction (S50).

Le procédé peut prévoir la répétition des étapes S12 et S22 tant que l'injecteur de réducteur présente une température trop élevée.

## Revendications

1. Un procédé de protection thermique d'un organe de dépollution d'une ligne d'échappement (88) pour un véhicule automobile hybride comprenant un moteur à combustion interne (80) et un moteur électrique (90), le procédé étant **caractérisé en ce que** l'organe de dépollution à protéger thermiquement est un injecteur (82) de réducteur pour réduction catalytique sélective et **en ce qu'**il comprend :
• la détermination (S10) d'une température de l'injecteur (82) de réducteur ;
• la comparaison (S20) entre la température déterminée et une température limite prédéterminée (T_{L}) ;
• l'entraînement (S30) du moteur à combustion interne (80) éteint par le moteur électrique (90) en fonction de la comparaison précédente des températures.

2. Le procédé de protection selon la revendication 1, **caractérisé en ce que** la détermination de la température de l'injecteur (82) est mise en oeuvre lors de l'extinction du moteur à combustion interne (80), l'entraînement du moteur à combustion interne (80) par le moteur électrique (90) étant réalisé par le maintien de la fermeture d'un embrayage entre le moteur à combustion interne (80) éteint et une chaîne de traction mue par le moteur électrique (90).

3. Le procédé selon la revendication 2, **caractérisé en ce que**, après une itération (S12, S22) des étapes de détermination d'une température de l'injecteur (82) de réducteur et de comparaison entre la température déterminée et la température limite prédéterminée (T_{L}), le procédé comprend l'ouverture de l'embrayage entre le moteur à combustion interne (80) éteint et la chaîne de traction mue par le moteur électrique (90) en fonction de la nouvelle comparaison des températures.

4. Le procédé de protection selon l'une des revendications 1 à 3, **caractérisé en ce que**, par défaut, à l'extinction du moteur à combustion interne (80), le moteur à combustion interne (80) est débrayé du moteur électrique (90).

5. Le procédé de protection selon l'une des revendications 1 à 4, **caractérisé en ce que** la détermination (S10, S12) de la température de l'injecteur est réalisée par une estimation à partir de l'un au moins des moyens suivants :
• une modélisation de la température de l'injecteur (82) ;
• une modélisation de la température des gaz dans la ligne d'échappement (88) ;
• une mesure de la température des gaz dans la ligne d'échappement (88) ;
• une modélisation du débit des gaz dans la ligne d'échappement (88) ; et
• une mesure du débit des gaz dans la ligne d'échappement (88).

6. Le procédé de protection selon l'une des revendications 1 à 5, **caractérisé en ce que** le procédé comprend une injection (S40) de réducteur dans la ligne d'échappement (88), en cas d'entraînement du moteur à combustion interne (80) éteint par le moteur électrique (90).

7. Le procédé selon la revendication 6, **caractérisé en ce que** l'injection (S40) de réducteur dans la ligne d'échappement est réalisée en cas d'entraînement du moteur à combustion interne (80) éteint par le moteur électrique (90), après une itération (S12, S22) des étapes de détermination d'une température de l'injecteur (82) de réducteur et de comparaison entre la température déterminée et la température limite prédéterminée (T_{L}), en fonction de la nouvelle comparaison des températures.

8. Le procédé selon l'une des revendications 1 à 7, **caractérisé en ce que** les étapes de détermination (S10) de la température de l'injecteur de réducteur et de comparaison (S20) avec une température limite (T_{L}) prédéterminée sont mises en oeuvre lorsque le moteur à combustion interne (80) est en fonctionnement, le procédé comprenant l'extinction du moteur à combustion interne (80) en fonction de la comparaison des températures.

9. Le procédé de protection selon l'une des revendications 1 à 8, **caractérisé en ce que** le réducteur de réduction catalytique sélective est de l'urée ou une solution comprenant de l'urée.

10. Un véhicule automobile hybride comprenant un calculateur, un moteur à combustion interne (80) et un moteur électrique (90) ainsi qu'une ligne d'échappement (88) des gaz issus du moteur à combustion interne (80) comprenant un injecteur (82) de réducteur pour la réduction catalytique sélective, le véhicule étant **caractérisé en ce que** le calculateur est spécialement conçu pour la mise en ouvre du procédé selon l'une des revendications 1 à 9.
